# EUROPÄISCHE PATENTSCHRIFT

(11) **EP 0 582 963 B1**
(45) Veröffentlichungstag und Bekanntmachung des Hinweises auf die Patenterteilung: **31.01.1996**
(21) Anmeldenummer: 93112511.6
(22) Anmeldetag: 04.08.1993
(51) Int. Cl.: B65G 47/244

(54) **Vorrichtung zur Lageänderung von auf Endlosförderern transportierten Gegenständen**
Device for changing the position of items transported on endless conveyors
Dispositif pour modifier la position d'objets transportés sur convoyeurs sans fin

(30) Priorität: 12.08.1992 DE 9210809 U
(43) Veröffentlichungstag der Anmeldung: 16.02.1994
(73) Patentinhaber: SIEMENS AKTIENGESELLSCHAFT, D-80333 München (DE)
(72) Erfinder: Engelhardt, Alfred, Dipl.-Ing. (FH), D-91241 Kirchensittenbach (DE)

(56) Entgegenhaltungen:
- EP-A- 0 115 558
- DE-A- 2 645 380
- DE-B- 1 283 151
- DE-U- 1 963 382
- DE-U- 7 605 226
- US-A- 2 761 542
- US-A- 3 666 077

## Beschreibung

Gegenstände, beispielsweise Pakete, die über Endlosfördervorrichtungen transportiert werden, werden in der Regel mit beliebiger Lage auf die Fördervorrichtung gegeben. Wenn die Gegenstände jedoch eingelagert, verteilt und/oder datenmäßig erfaßt werden sollen, kann es notwendig sein, sie in eine bestimmte Lage zu bringen.

Aufgabe der Erfindung ist es, eine Vorrichtung zur automatischen Lageänderung von auf Endlosfördervorrichtungen transportierten Gegenständen zu erhalten.

Diese Aufgabe wird gelöst durch einen ersten Förderbereich, der so ausgebildet ist, daß zur Kraftkomponente in Förderlängsrichtung eine Querkraft auf die Gegenstände ausgeübt wird, einen senkrecht zur Förderebene angebrachten Längsanschlag, sowie einen steuerbaren Queranschlag, der von der Seite, über den Längsanschlag hinaus in die Förderbahn hineinragend, in den Förderbereich einbringbar ist, und einen zweiten, nach dem Queranschlag angeordneten Förderbereich F2, der wie der erste Förderbereich ausgebildet ist. Die gewünschte Kräfteverteilung läßt sich in vorteilhafter Weise durch Rollenförderer mit schräggestellten Rollen erzielen.

Nach einer vorteilhaften Ausbildung der Erfindung ist der Längsanschlag des zweiten Förderbereichs in Richtung der Querkraft parallel zum ersten Förderbereich versetzt angeordnet. Damit ergibt sich an der Übergangsstelle zwischen den beiden Förderbereichen eine Verbreiterung, so daß die Gegenstände, nachdem sie durch den eingebrachten Queranschlag gedreht worden sind, einen längeren Weg in Querkraftrichtung zurücklegen und somit optimal parallel zum zweiten Längsanschlag ausgerichtet werden.

Eine weitere vorteilhafte Ausbildung der Erfindung besteht darin, daß vor dem Queranschlag eine optische Sensorvorrichtung zur Erkennung der Lage der geförderten Gegenstände angebracht ist. Dadurch kann erkannt werden, ob der Gegenstand, der im ersten Förderbereich bereits an den Längsanschlag geführt wurde, bereits die richtige Lage hat, oder ob es nötig ist, durch Einbringung des Queranschlages eine Lageänderung einzuleiten. Als einfache und wirtschaftliche optische Sensorvorrichtung läßt sich ein Strichcodeleser einsetzen.

Durch eine weitere Ausbildung der Erfindung, die darin besteht, daß gegen Ende des zweiten Förderbereichs eine weitere optische Sensorvorrichtung angebracht ist, kann nochmals überprüft werden, ob die Gegenstände die richtige Lage eingenommen haben.

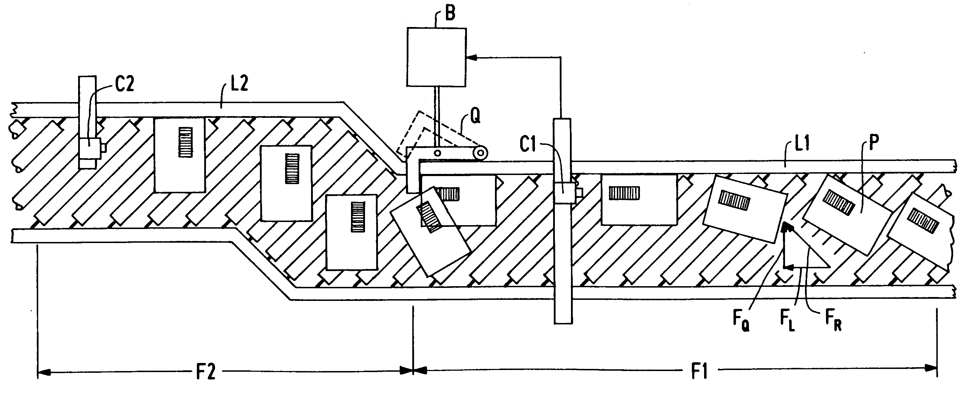

Eine Ausbildung der Erfindung wird im folgenden anhand der Zeichnung näher beschrieben.

Die Figur zeigt eine Rollenfördervorrichtung die aus den Förderbereichen F1 und F2 besteht. Der Längsanschlag L2 des zweiten Förderbereichs F2 ist gegenüber dem Längsanschlag L1 des ersten Förderbereichs F1 seitlich parallel versetzt. Die beiden Förderbereiche F1, F2 sind als Rollenfördervorrichtungen ausgebildet, wobei die Rollen schräggestellt sind und dadurch - wie durch das Kräftedreieck gezeigt - auf die Pakete P eine Kraft in Längsrichtung F_{L} und eine Querkraft F_{Q} ausüben. An der rechten Seite in Förderrichtung gesehen, sind die Förderbereiche F1, F2 jeweils durch einen Längsanschlag L1, L2 begrenzt. Ebenfalls an der rechten Seite befindet sich am Übergang vom Förderbereich F1 zum Förderbereich F2 ein Queranschlag Q, der über eine Betätigungsvorrichtung B seitlich über den Längsanschlag L1 hinaus in den Förderbereich einbringbar ist. Vor dem Queranschlag Q ist ein Strichcode bzw. Barcodeleser C1 angebracht, der über eine Leitung mit der Betätigungsvorrichtung B verbunden ist. Gegen Ende des Förderbereichs F2 befindet sich ein zweiter Barcodeleser C2.

Die in einem nicht dargestellten Wareneingang auf eine Fördervorrichtung verbrachten Pakete P gelangen mit beliebiger Lage in den Förderbereich F1. Durch die schräggestellten Rollen wird zusätzlich zur Längskraft F_{L} eine Querkraft F_{Q} auf die Pakete ausgeübt, so daß diese an den Längsanschlag L1 gebracht und zu diesem parallel ausgerichtet werden. Jedes Paket P weist an seiner Oberseite einen Strichcode auf, der durch den Strichcodeleser C1 gelesen werden soll. Da das Paket im Förderbereich F1 jedoch so ausgerichtet ist, daß der Strichcode in Längsrichtung am Strichcodeleser C1 vorbeigeführt wird, ist dieser nicht in der Lage den Strichcode zu lesen. Der Strichcodeleser gibt deshalb ein Signal an die Betätigungsvorrichtung B aus, die daraufhin den Queranschlag Q in den Förderbereich einbringt. Das auf den Queranschlag Q auflaufende Paket P erhält durch den Anschlag Q und die schräggestellten Rollen ein Drehmoment, so daß es um den Queranschlag Q gedreht wird, bis es von diesem freikommt. Danach wird es von den schräggestellten Rollen im Förderbereich F2 wieder an den Längsanschlag L2 geführt und parallel zu diesem ausgerichtet. Durch den seitlichen Versatz
entsteht in einem Übergangsbereich ein größerer Weg in Richtung der Querkraft F_{Q}, so daß eine sichere Ausrichtung am Längsanschlag L2 gewährleistet ist. Nunmehr liegt der Strichcode des Pakets P quer zum Strichcodeleser C2, so daß er von diesem gelesen werden kann. Die Lesbarkeit des Strichcode bedeutet gleichzeitig daß das Paket seine richtige Lage eingenommen hat.

Durch eine Hintereinanderschaltung mehrere gleich ausgebildeter Förderbereiche F1, F2 könnten weitere Lageänderungen der Pakete bewirkt werden.

## Patentansprüche

1. Vorrichtung zur Lageänderung von auf Endlosförderern transportierten Gegenständen, insbesondere von Paketen (P), mit:
1.1 einem ersten Förderbereich (F1), der so ausgebildet ist, daß zur Kraftkomponente (F_{L}) in Förderlängsrichtung eine Querkraft (F_{Q}) auf die Gegenstände (P) ausgeübt wird,
1.2 einem senkrecht zur Förderebene angebrachten Längsanschlag (L1,L2),
1.3 einem steuerbaren Queranschlag (Q) der von der Seite, über den Längsanschlag hinaus in die Förderbahn hineinragend, in den Förderbereich (F1,F2) einbringbar ist,
1.4 einem zweiten, nach dem Queranschlag (Q) angeordneten Förderbereich (F2), der entsprechend Merkmal 1.1 ausgebildet ist.

2. Vorrichtung nach Anspruch 1, bei der die Förderbereiche (F1,F2) als Rollenförderer mit schräggestellten Rollen ausgebildet sind.

3. Vorrichtung nach Anspruch 1 oder 2, bei der der Längsanschlag (L2) des zweiten Förderbereichs (F2) in Richtung der Querkraft (F_{Q}) parallel zum Längsanschlag (L1) des ersten Förderbereichs (F1) versetzt angeordnet ist.

4. Vorrichtung nach einem der vorstehenden Ansprüche mit einer optischen Sensorvorrichtung (C1) vor dem Queranschlag (Q) zur Erkennung der Lage des Gegenstands (P).

5. Vorrichtung nach Anspruch 4, bei der die optische Sensorvorrichtung (C1) ein Strichcodeleser ist.

6. Vorrichtung nach Anspruch 4 oder 5, bei der nach dem Queranschlag (Q) eine zweite optische Sensorvorrichtung (C2) angebracht ist.

## Claims

1. Device for the position change of objects transported on continuous conveyors, in particular of packages (P), having
1.1 a first conveyor region (F1) which is constructed in such a way that for the force component (F_{L}) in the longitudinal conveyor direction a transverse force (F_{Q}) is exerted on the objects (P),
1.2 a longitudinal stop (L1, L2) fitted at right angles to the conveyor plane,
1.3 a controllable transverse stop (Q) which can be introduced into the conveyor region (F1, F2) from the side, projecting beyond the longitudinal stop into the conveyor path,
1.4 a second conveyor region (F2) arranged after the transverse stop (Q), which region is constructed corresponding to feature 1.1.

2. Device according to claim 1, where the conveyor regions (F1, F2) are constructed as roller conveyors with inclined rollers.

3. Device according to claim 1 or 2, where the longitudinal stop (L2) of the second conveyor region (F2) is staggered in the direction of the transverse force (F_{Q}) parallel to the longitudinal stop (L1) of the first conveyor region (F1).

4. Device according to one of the above claims, with an optical sensor device (C1) in front of the transverse stop (Q) to detect the position of the object (P).

5. Device according to claim 4, where the optical sensor device (C1) is a bar-code reader.

6. Device according to claim 4 or 5, where after the transverse stop (Q) a second optical sensor device (C2) is fitted.

## Revendications

1. Dispositif destiné à modifier la position d'objets transportés sur des convoyeurs sans fin, notamment de paquets (P), comportant :
1.1 une première zone de convoyage (F1) qui est agencée de telle sorte que, par rapport à la composante de force (F_{L}) agissant dans la direction longitudinale du convoyage, une force transversale (F_{Q}) soit appliquée aux objets (P),
1.2 une butée longitudinale (L1, L2) disposée perpendiculairement au plan de convoyage,
1.3 une butée transversale (Q) pouvant être commandée qui, pour pénétrer dans la voie de convoyage, peut être insérée dans la zone de convoyage (F1, F2) au-dessus de la butée longitudinale,
1.4 une deuxième zone de convoyage (F2) disposée en aval de la butée transversale (Q), qui est agencée selon la particularité 1.1.

2. Dispositif selon la revendication 1, selon lequel les zones de convoyage (F1, F2) sont agencées en tant que convoyeurs à rouleaux comportant des rouleaux inclinés.

3. Dispositif selon la revendication 1 ou la revendication 2, selon lequel la butée longitudinale (L2) de la deuxième zone de convoyage (F2) est décalée en direction de la force transversale (F_{Q}) parallèlement à la butée longitudinale (L1) de la première zone de convoyage (F1).

4. Dispositif selon l'une quelconque des revendications précédentes, comportant en amont de la butée transversale (Q) un dispositif de détection optique (C1) destiné à identifier la position des objets (P).

5. Dispositif selon la revendication 4, selon lequel le dispositif de détection optique (C1) est un lecteur de code-barre.

6. Dispositif Selon la revendication 4 ou 5, selon lequel un deuxième dispositif de détection optique (C2) est disposé en aval de la butée transversale (Q).
